# EUROPÄISCHE PATENTSCHRIFT

(11) **EP 1 647 682 B1**
(45) Veröffentlichungstag und Bekanntmachung des Hinweises auf die Patenterteilung: **30.12.2009**
(21) Anmeldenummer: 05108194.1
(22) Anmeldetag: 07.09.2005
(51) Int. Cl.: F01N 3/20, F01N 3/28

(54) **Abgasnachbehandlungsvorrichtung und Verfahren zum Betreiben einer Abgasnachbehandlungsvorrichtung**
Exhaust treatment device and method to operate an exhaust treatment device
Dispositif de traitement de gaz d'échappement et procédé pour commander un dispositif de traitement de gaz d'échappement

(30) Priorität: 16.10.2004 DE 102004050768
(43) Veröffentlichungstag der Anmeldung: 19.04.2006
(73) Patentinhaber: ROBERT BOSCH GMBH, 70442 Stuttgart (DE)
(72) Erfinder: Woerz, Stefan, 71665, Vaihingen/Enz (DE); Fuchs, Christian, 70190, Stuttgart (DE)

(56) Entgegenhaltungen:
- EP-A- 0 918 146
- DE-A1- 2 428 964
- DE-A1- 10 003 090
- DE-A1- 19 822 591
- FR-A- 2 820 989

## Beschreibung

### Stand der Technik

Die Erfindung geht aus von einer Abgasnachbehandlungsvorrichtung sowie einem Verfahren zum Betreiben einer Abgasnachbehandlungsvorrichtung nach den Oberbegriffen der unabhängigen Ansprüche.

Dokument FR 282 09 89 zeigt eine Abgasnachbehandlungsvorrichtung mit einem Dosierelement.

Zur Verminderung der in einem Abgas eines Verbrennungsmotors enthaltenen Stickoxide hat sich für solche Verbrennungsmotoren, die mit Luftüberschuss betrieben werden, ein Verfahren zur selektiven katalytischen Reduktion als vorteilhaft erwiesen. Bei diesem Verfahren werden die Stickoxide zusammen mit Ammoniak in einem selektiven Katalysator zu Stickstoff und Wasser umgesetzt. Das zur katalytischen Umsetzung der Stickoxide notwendige Reduktionsmittel wird anstelle des Ammoniaks in Form einer wässrigen Harnstofflösung im Fahrzeug mitgeführt, aus der das Ammoniak durch Hydrolyse der Harnstofflösung in der jeweils zur Umsetzung benötigten Menge freigesetzt werden kann. Bekannt ist, die Harnstofflösung mittels in einer Mischkammer stattfindenden Aerosolbildung in einen dieser nachgeschalteten Abgasstrang einzuspritzen. Bekannt ist auch die Alternative die Harnstofflösung ohne Luftunterstützung direkt in das Abgas zu dosieren. Dabei kann das Reduktionsmittel bedarfsgerecht zudosiert werden. Die Verwendung eines Katalysators zur selektiven katalytischen Reduktion mit Speicherfähigkeit dient zur Pufferung des NH3-Bedarfs bei hohen Lasten und Lastsprüngen.

Im Gegensatz hierzu arbeitet der sogenannte Speicherkatalysator stets diskontinuierlich. Es ist bereits vorgeschlagen worden, den Reduktionskatalysator beispielsweise von Dieselmotoren, während des Normalbetriebs mit Stickoxiden, beispielsweise NOx, zu beladen und anschließend im so genannten Regenerationsbetrieb zu reinigen. Dieser Prozess findet bei einer sauerstoffarmen Abgaszusammensetzung mit hohem Anteil an Kohlenmonoxid (CO) und Kohlenwasserstoff (HC) statt. Diese Gase dienen als Reduktionsmittel für das gespeicherte NOx. Bei allen üblichen Verfahren zur Abgasnachbehandlung mit diesem diskontinuierlichen Betrieb wird das präparierte Abgas auf die gesamten zusätzlichen Komponenten eingebracht.

Alternativ zu diesem zeitlich diskontinuierlichen Betrieb des geschilderten Verfahrens zur Abgasnachbehandlung existiert prinzipiell auch die Möglichkeit, ein solches Verfahren zur Abgasnachbehandlung auch zeitlich kontinuierlich durchzuführen. Hierfür ist darauf zu achten, dass die jeweilige Komponente zur Abgasnachbehandlung räumlich getrennt einmal im Normalbetrieb und gleichzeitig im Regenerationsbetrieb betrieben wird. Hierfür ist es erforderlich, den notwendigen Hilfsstoff räumlich eingeschränkt aufzubringen.

### Vorteile der Erfindung

Es wird vorgeschlagen, dass die erfindungsgemäße Abgasnachbehandlungsvorrichtung zum Nachbehandeln von Abgasen eines Verbrennungsmotors mit Luftüberschuss ein Abgassystem umfasst, in dem ein Reduktionskatalysator zur Reduktion von NOx-Bestandteilen des Abgases der Brennkraftmaschine angeordnet ist, eine dem Abgassystem vorgelagerte Aufbereitungseinheit und eine Dosiereinheit zum dosierten Einbringen eines Reduktionsmittels in den Reduktionskatalysator, wobei die Dosiereinheit in Abströmrichtung des Reduktionsmittels ein Dosierelement mit Auslasskanälen aufweist, welche mit Einlassvorrichtungen des Reduktionskatalysators korrespondieren. Hierdurch wird vorteilhafterweise eine lokale Einbringung von Komponenten zur Abgasnachbehandlung realisiert, und die Abgasnachbehandlung kann mit der erfindungsgemäßen Abgasnachbehandlungsvorrichtung zeitlich kontinuierlich betrieben werden.

In einer bevorzugten Ausführungsform der erfindungsgemäßen Abgasnachbehandlungsvorrichtung sind die Auslasskanäle des Dosierelements gitterförmig angeordnet. Insbesondere können die gitterförmigen Auslasskanäle des Dosierelements einen Abstand aufweisen, der auf eine Zellendichte des Reduktionskatalysators abgestimmt ist. Der Reduktionskatalysator kann wabenförmig angeordnete Einlassvorrichtungen aufweisen, auf welche vorteilhafterweise die gitterförmigen Auslasskanäle des Dosierelements angepasst werden können. Es wird dadurch ein zielgerichtetes Einbringen des Reduktionsmittels in Hohlräume der Zellen des Reduktionskatalysators erreicht. Ein seitliches Austreten des Reduktionsmittels kann dadurch weitgehend vermieden werden. Günstigerweise weist die Dosiereinheit stromauf der Auslasskanäle einen Hohlraum auf, wodurch eine Gleichverteilung des Reduktionsmittels erzielt werden kann. Es ist dabei von Vorteil, dass ein besonders regelmäßiges, räumlich lokales Einbringen des Reduktionsmittels in den Reduktionskatalysator ermöglicht wird.

In einer besonders günstigen Ausführungsform der Abgasnachbehandlungsvorrichtung kann die Aufbereitungseinheit entlang einer die Einlassvorrichtungen für das Reduktionsmittel in den Reduktionskatalysator aufweisenden Ebene verschiebbar sein. Vorteilhafterweise kann damit die Abgasnachbehandlung kontinuierlich betrieben werden, wobei ein erster Teil des Reduktionskatalysators im Normalbetrieb läuft, und ein zweiter Teil gleichzeitig im Regenerationsbetrieb betrieben wird. Der Reduktionskatalysator ist dermaßen entlang der die Einlassvorrichtungen aufweisenden Ebene verschoben, dass die Einlassvorrichtungen des zweiten Teils des Reduktionskatalysators den Auslasskanälen des Dosierelements zugewandt sind. Das Reduktionsmittel kann somit vorteilhafterweise räumlich lokal in den zweiten Teil des Reduktionskatalysators eingebracht werden, der gerade im Regenerationsbetrieb betrieben wird.

Es kann vorgesehen sein, dass im Abgasstrang ein höherer statischer Druck herrscht als im Hohlraum der Dosiereinheit. Dies kann durch einen stark beladenen, am Ende des Abgasstrangs angeordneten Partikelfilter oder dem Ausfall der Aufbereitungseinheit verursacht werden, wobei im ungünstigsten Fall Rußpartikel-Emissionen in die Dosiereinheit und die zugehörige Bereitstellungsvorrichtung eindringen können. Mit der erfindungsgemäßen Vorrichtung kann vorteilhafterweise das Eindringen von Rußpartikeln weitgehend verhindert werden.

Bevorzugt kann eine beispielsweise an der Aufbereitungseinheit angeordnete Messvorrichtung vorgesehen sein, mit der ein möglicherweise entstehender Druckabfall festgestellt werden kann. Dieser kann günstigerweise durch eine Feinabstimmung bei der Dosierung des Reduktionsmittels in der Dosiereinheit ausgeglichen werden. Es können somit Probleme im Regenerationsbetrieb durch eine zu schwache Dosierung an Reduktionsmitteln vermieden werden.

Erfindungsgemäß wird ein Verfahren zum Betreiben einer Abgasnachbehandlungsvorrichtung zum Nachbehandeln von Abgasen eines Verbrennungsmotors mit Luftüberschuss mit einem Abgassystem , umfassend einen Reduktionskatalysator zur Reduktion von NOx-Bestandteilen des Abgases der Brennkraftmaschine, mit einer dem Abgassystem vorgelagerten Aufbereitungseinheit und mit einer Dosiereinheit zum dosierten Einbringen eines Reduktionsmittels in den Reduktionskatalysator bereitgestellt, wobei das Reduktionsmittel in Abströmrichtung von der Dosiereinheit aus Auslasskanälen in korrespondierende Einlassvorrichtungen des Reduktionskatalysators eingebracht wird. Es ist auch eine Gegenstromdosierung möglich. Dadurch wird bei Überdosierung das Reduktionsmittel nicht als Schadstoff ausgestoßen. Das Reduktionsmittel kann bei dem erfindungsgemäßen Verfahren mittels der Dosiereinheit kontinuierlich gefördert werden. Bei kontinuierlicher Reduktionsmittelförderung kann der Reduktionskatalysator gleichzeitig in einem ersten Teil in einem Normalbetrieb und in einem zweiten Teil in einem Regenerationsbetrieb betrieben werden.

Günstigerweise kann bei dem erfindungsgemäßen Verfahren die Aufbereitungseinheit dermaßen entlang einer die Einlassvorrichtungen für das Reduktionsmittel in den Reduktionskatalysator aufweisenden Ebene verschoben werden, dass das Reduktionsmittel in den im Regenerationsbetrieb betriebenen zweiten Teil des Reduktionskatalysators eingebracht wird. Bei dem Verfahren wird somit der Reduktionskatalysator bei kontinuierlicher Reduktionsmittelförderung gleichzeitig in einem ersten Teil in einem Normalbetrieb und in einem zweiten Teil in einem Regenerationsbetrieb betrieben.

### Zeichnung

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand eines in einer Zeichnung dargestellten Ausführungsbeispiels der Erfindung.

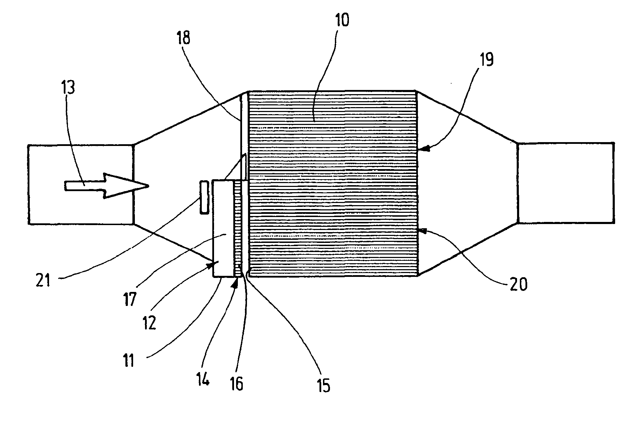

Die einzige Figur zeigt eine Ausführungsform einer erfindungsgemä-ßen Abgasnachbehandlungsvorrichtung.

### Beschreibung des Ausführungsbeispiels

Die Abgasnachbehandlungsvorrichtung zum Nachbehandeln von Abgasen eines Verbrennungsmotors mit Luftüberschuss umfasst ein Abgassystem, in dem ein Reduktionskatalysator 10 zur Reduktion von NOx-Bestandteilen des Abgases der Brennkraftmaschine angeordnet ist. Dem Abgassystem ist eine Aufbereitungseinheit 11 mit einer Dosiereinheit 12 zum dosierten Einbringen eines Reduktionsmittels in den Reduktionskatalysator 10 vorgelagert. Das Reduktionsmittel wird in Abströmrichtung 13 von der Dosiereinheit 12 aus Auslasskanälen 16 in korrespondierende Einlassvorrichtungen 15 des Reduktionskatalysators 10 eingebracht.

Die Dosiereinheit 12 weist in Abströmrichtung 13 des Reduktionsmittels ein Dosierelement 14 mit den Auslasskanälen 16 auf, welche den Einlassvorrichtungen 15 des Reduktionskatalysators 10 entsprechen. Die Auslasskanäle 16 des Dosierelements 14 sind gitterförmig angeordnet, was aus der Figur nicht ersichtlich ist. Die Auslasskanäle sind aus möglichst feinen Röhrchen gebildet, insbesondere Kapillare. Diese feinen Röhrchen bewirken, dass die Strömung des Reduktionsmittels ausgerichtet wird, so dass es möglichst gerichtet und geradlinig austreten kann. Die gitterförmigen Auslasskanäle 16 des Dosierelements 14 weisen bevorzugt einen Abstand auf, der auf eine Zellendichte des Reduktionskatalysators 10 abgestimmt ist. Durch diese Abstimmung des Gitterabstands zwischen dem Dosierelement und der Abgasnachbehandlungskomponente kann das Reduktionsmittel zielgerichtet in die Hohlräume der Zellen des Reduktionskatalysators 10 eingebracht werden. Ein seitliches Austreten des Reduktionsmittels wird somit weitgehend verhindert.

Die Dosiereinheit 14 weist stromauf der Auslasskanäle 16 einen Hohlraum 17 auf, mit dem eine Gleichverteilung des Reduktionsmittels erreicht werden kann.

Die Aufbereitungseinheit 11 ist entlang einer die Einlassvorrichtungen 15 für das Reduktionsmittel in den Reduktionskatalysator 10 aufweisenden Ebene 18 verschiebbar. Durch diese Anordnung kann vorteilhafterweise erzielt werden, dass die Abgasnachbehandlung kontinuierlich betrieben wird, wobei ein erster Teil 19 des Reduktionskatalysators 10 im Normalbetrieb läuft, und ein zweiter Teil 20 gleichzeitig im Regenerationsbetrieb betrieben wird. Der Reduktionskatalysator 10 ist in der Figur dermaßen entlang einer die Einlassvorrichtungen 15 aufweisenden Ebene 18 verschoben, dass die Einlassvorrichtungen 15 des zweiten Teils 20 des Reduktionskatalysators 10 den Auslasskanälen 16 des Dosierelements 14 zugewandt sind. Das Reduktionsmittel kann somit vorteilhafterweise räumlich lokal in den zweiten Teil 20 des Reduktionskatalysators 10 eingebracht werden, der gerade im Regenerationsbetrieb betrieben wird.

Mit dem erfindungsgemäßen Verfahren wird das Reduktionsmittel mittels der Dosiereinheit 12 kontinuierlich dosiert. Vorteilhafterweise kann damit die Abgasnachbehandlung kontinuierlich betrieben werden, wobei ein erster Teil 19 des Reduktionskatalysators 10 im Normalbetrieb läuft, und ein zweiter Teil 20 gleichzeitig im Regenerationsbetrieb betrieben wird. Der Reduktionskatalysator 10 ist dermaßen entlang einer die Einlassvorrichtungen 15 aufweisenden Ebene 18 verschoben, dass die Einlassvorrichtungen 15 des zweiten Teils 20 des Reduktionskatalysators 10 den Auslasskanälen 16 des Dosierelements 14 zugewandt sind. Das Reduktionsmittel kann somit vorteilhafterweise räumlich lokal in den zweiten Teil 20 des Reduktionskatalysators 10 eingebracht werden, der gerade im Regenerationsbetrieb betrieben wird.

Es kann mit einer an der Dosiereinheit vorgesehenen Messvorrichtung 21 festgestellt werden, ob zwischen dem im Abgasstrang und dem im Hohlraum 17 der Dosiereinheit 12 vorherrschenden Druck ein Druckabfall vorhanden ist. Dieser kann mit der Dosiereinheit 12 durch eine sehr genau zudosierte Menge an Reduktionsmittel ausgeglichen werden.

## Patentansprüche

1. Abgasnachbehandlungsvorrichtung zum Nachbehandeln von Abgasen eines Verbrennungsmotors mit Luftüberschuss mit einem Abgassystem, in dem ein Reduktionskatalysator (10) zur Reduktion von NOx-Bestandteilen des Abgases der Brennkraftmaschine angeordnet ist, mit einer dem Abgassystem vorgelagerten Aufbereitungseinheit (11) und mit einer Dosiereinheit (12) zum dosierten Einbringen eines Reduktionsmittels in den Reduktionskatalysator (10), **dadurch gekennzeichnet, dass** die Dosiereinheit (12) in einer Abströmrichtung (13) des Reduktionsmittels ein Dosierelement (14) mit Auslasskanälen (16) aufweist, die mit Einlassvorrichtungen (15) des Reduktionskatalysators (10) korrespondieren.

2. Abgasnachbehandlungsvorrichtung nach Anspruch 1, **dadurch gekennzeichnet, dass** die Auslasskanäle (16) des Dosierelements (14) gitterförmig angeordnet sind.

3. Abgasnachbehandlungsvorrichtung nach Anspruch 1 oder 2, **dadurch gekennzeichnet, dass** die gitterförmigen Auslasskanäle (16) des Dosierelements (14) einen Abstand aufweisen, der auf eine Zellendichte des Reduktionskatalysators (10) abgestimmt ist.

4. Abgasnachbehandlungsvorrichtung nach einem der vorhergehenden Ansprüche, **dadurch gekennzeichnet, dass** die Dosiereinheit (14) stromauf der Auslasskanäle (16) einen Hohlraum (17) zur Gleichverteilung des Reduktionsmittels aufweist.

5. Abgasnachbehandlungsvorrichtung nach einem der vorhergehenden Ansprüche, **dadurch gekennzeichnet, dass** die Aufbereitungseinheit (11) entlang einer die Einlassvorrichtungen (15) für das Reduktionsmittel in den Reduktionskatalysator (10) aufweisenden Ebene (18) verschiebbar ist.

6. Verfahren zum Betreiben einer Abgasnachbehandlungsvorrichtung zum Nachbehandeln von Abgasen eines Verbrennungsmotors mit Luftüberschuss mit einem Abgassystem, umfassend einen Reduktionskatalysator (10) zur Reduktion von NOx-Bestandteilen des Abgases der Brennkraftmaschine, mit einer dem Abgassystem vorgelagerten Aufbereitungseinheit (11) und mit einer Dosiereinheit (12) zum dosierten Einbringen eines Reduktionsmittels in den Reduktionskatalysator (10), **dadurch gekennzeichnet, dass** das Reduktionsmittel in Abströmrichtung (13) von der Dosiereinheit (12) aus Auslasskanälen (16) in korrespondierende Einlassvorrichtungen (15) des Reduktionskatalysators (10) eingebracht wird.

7. Verfahren nach Anspruch 6, **dadurch gekennzeichnet, dass** das Reduktionsmittel mittels der Dosiereinheit (12) kontinuierlich gefördert wird.

8. Verfahren nach einem der Ansprüche 6 oder 7, **dadurch gekennzeichnet, dass** der Reduktionskatalysator (10) bei kontinuierlicher Reduktionsmittelförderung gleichzeitig in einem ersten Teil (19) in einem Normalbetrieb und in einen zweiten Teil (20) in einem Regenerationsbetrieb betrieben wird.

9. Verfahren nach einem der Ansprüche 6 bis 8, **dadurch gekennzeichnet, dass** die Aufbereitungseinheit (11) dermaßen entlang einer die Einlassvorrichtungen (15) für das Reduktionsmittel in den Reduktionskatalysator (10) aufweisenden Ebene (18) verschoben wird, dass das Reduktionsmittel in den im Regenerationsbetrieb betriebenen zweiten Teil (20) des Reduktionskatalysators (10) eingebracht wird.

## Claims

1. Exhaust-gas aftertreatment device for the aftertreatment of exhaust gases of an internal combustion engine with an excess of air, having an exhaust system in which is arranged a reduction catalytic converter (10) for the reduction of NOx constituents of the exhaust gas of the internal combustion engine, having a preparation unit (11) positioned upstream of the exhaust system and having a dosing unit (12) for the dosed introduction of a reducing agent into the reduction catalytic converter (10), **characterized in that** the dosing unit (12) has, in an outflow direction (13) of the reducing agent, a dosing element (14) with outlet ducts (16) which correspond to inlet devices (15) of the reduction catalytic converter (10).

2. Exhaust-gas aftertreatment device according to Claim 1, **characterized in that** the outlet ducts (16) of the dosing element (14) are arranged in a grid-like manner.

3. Exhaust-gas aftertreatment device according to Claim 1 or 2, **characterized in that** the grid-like outlet ducts (16) of the dosing element (14) have a spacing which is coordinated with a cell density of the reduction catalytic converter (10).

4. Exhaust-gas aftertreatment device according to one of the preceding claims, **characterized in that** the dosing unit (14) has, upstream of the outlet ducts (16), a cavity (17) for the uniform distribution of the reducing agent.

5. Exhaust-gas aftertreatment device according to one of the preceding claims, **characterized in that** the preparation unit (11) can be moved along a plane (18) which has the inlet devices (15) for the reducing agent into the reduction catalytic converter (10).

6. Method for operating an exhaust-gas aftertreatment device for the aftertreatment of exhaust gases of an internal combustion engine with an excess of air, having an exhaust system comprising a reduction catalytic converter (10) for the reduction of NOx constituents of the exhaust gas of the internal combustion engine, having a preparation unit (11) which is positioned upstream of the exhaust system and having a dosing unit (12) for the dosed introduction of a reducing agent into the reduction catalytic converter (10), **characterized in that** the reducing agent is introduced in the outflow direction (13) from the dosing unit (12) out of outlet ducts (16) into corresponding inlet devices (15) of the reduction catalytic converter (10).

7. Method according to Claim 6, **characterized in that** the reducing agent is fed continuously by means of the dosing unit (12).

8. Method according to one of Claims 6 or 7, **characterized in that**, with a continuous feed of reducing agent, the reduction catalytic converter (10) is operated simultaneously in a normal mode in a first part (19) and in a regeneration mode in a second part (20).

9. Method according to one of Claims 6 to 8, **characterized in that** the preparation unit (11) is moved along a plane (18) which has the inlet devices (15) for the reducing agent into the reduction catalytic converter (10) in such a way that the reducing agent is introduced into the second part (20), which is operated in the regeneration mode, of the reduction catalytic converter (10).

## Revendications

1. Dispositif de post-traitement de gaz d'échappement pour le post-traitement de gaz d'échappement d'un moteur à combustion interne avec un excès d'air, comprenant un système de gaz d'échappement dans lequel est disposé un catalyseur de réduction (10) pour la réduction des constituants de NOx du gaz d'échappement du moteur à combustion interne, une unité de préparation (11) montée en aval du système de gaz d'échappement, et une unité de dosage (12) pour l'introduction dosée d'un agent réducteur dans le catalyseur de réduction (10), **caractérisé en ce que** l'unité de dosage (12) présente, dans une direction d'écoulement (13) de l'agent réducteur, un élément de dosage (14) avec des canaux de sortie (16), qui correspondent à des dispositifs d'entrée (15) du catalyseur de réduction (10).

2. Dispositif de post-traitement de gaz d'échappement selon la revendication 1, **caractérisé en ce que** les canaux de sortie (16) de l'élément de dosage (14) sont disposés en forme de grille.

3. Dispositif de post-traitement de gaz d'échappement selon la revendication 1 ou 2, **caractérisé en ce que** les canaux de sortie (16) en forme de grille de l'élément de dosage (14) présentent un espacement qui est adapté à une densité de cellules du catalyseur de réduction (10).

4. Dispositif de post-traitement de gaz d'échappement selon l'une quelconque des revendications précédentes, **caractérisé en ce que** l'unité de dosage (14) présente en aval des canaux de sortie (16) un espace creux (17) pour la répartition uniforme de l'agent réducteur.

5. Dispositif de post-traitement de gaz d'échappement selon l'une quelconque des revendications précédentes, **caractérisé en ce que** l'unité de préparation (11) peut être déplacée le long d'un plan (18) présentant les dispositifs d'entrée (15) pour l'agent réducteur dans le catalyseur de réduction (10).

6. Procédé pour faire fonctionner un dispositif de post-traitement de gaz d'échappement pour le post-traitement de gaz d'échappement d'un moteur à combustion interne avec un excès d'air, comprenant un système de gaz d'échappement comprenant un catalyseur de réduction (10) pour la réduction des constituants de NOx du gaz d'échappement du moteur à combustion interne, une unité de préparation (11) montée en aval du système de gaz d'échappement, et une unité de dosage (12) pour l'introduction dosée d'un agent réducteur dans le catalyseur de réduction (10), **caractérisé en ce que** l'agent réducteur est introduit dans la direction d'écoulement (13) depuis l'unité de dosage (12) hors de canaux de sortie (16) dans des dispositifs d'entrée correspondants (15) du catalyseur de réduction (10).

7. Procédé selon la revendication 6, **caractérisé en ce que** l'agent réducteur est transporté en continu au moyen de l'unité de dosage (12).

8. Procédé selon l'une quelconque des revendications 6 ou 7, **caractérisé en ce que** le catalyseur de réduction (10), lors du transport d'agent réducteur continu, fonctionne simultanément dans une première partie (19) en mode de fonctionnement normal et dans une deuxième partie (20) en mode de régénération.

9. Procédé selon l'une quelconque des revendications 6 à 8, **caractérisé en ce que** l'unité de préparation (11) est déplacée le long d'un plan (18) présentant les dispositifs d'entrée (15) pour l'agent réducteur dans le catalyseur de réduction (10), dans une mesure telle que l'agent réducteur soit introduit dans la deuxième partie (20) du catalyseur de réduction (10) fonctionnant en mode de régénération.
